# EUROPEAN PATENT SPECIFICATION

(11) **EP 2 149 804 B1**
(45) Date of publication and mention of the grant of the patent: **19.01.2011**
(21) Application number: 09008510.1
(22) Date of filing: 30.06.2009
(51) Int. Cl.: G02B 6/122, G02B 6/138

(54) **Method for manufacturing optical waveguide**
Verfahren zur Herstellung eines optischen Wellenleiters
Procédé de fabrication de guide d'onde optique

(30) Priority: 28.07.2008 JP 2008192961
(43) Date of publication of application: 03.02.2010
(73) Proprietor: Nitto Denko Corporation, Ibaraki-shi Osaka 567-8680 (JP)
(72) Inventor: Naitou, Ryusuke, Ibaraki-shi Osaka 567-8680 (JP); Nagafuji, Akiko, Ibaraki-shi Osaka 567-8680 (JP); Shimizu, Yusuke, Ibaraki-shi Osaka 567-8680 (JP)
(74) Representative: HOFFMANN EITLE

(56) References cited:
- EP-A1- 1 762 869
- US-A1- 2004 234 224
- US-A1- 2005 286 831

## Description

### TECHNICAL FIELD OF THE INVENTION

The present invention relates to a method for manufacturing an optical waveguide including cores and an over-cladding layer covering the cores.

### BACKGROUND ART

An optical waveguide, which is light-weight and capable of carrying out a high-speed signal transmission, has been expected to be utilized as various kinds of electronic devices. As a conventional manufacturing method for an optical waveguide, a method for forming an over-cladding layer by allowing a liquid-state resin to flow to be extended in a manner so as to cover cores that are pattern-formed has been known (see Japanese Unexamined Patent Application Publication No. 2005-165138). Another method of manufacturing a polymer optical waveguide using a mold to form a core layer is disclosed in EP 1 762 869.

In an optical waveguide obtained by a conventional manufacturing method, light passing through the cores is scattered greatly to cause a problem of low optical transmission efficiency. An object of the present invention is to provide a method for manufacturing an optical waveguide that has small light scattering passing through the cores so that a high optical transmission efficiency is achieved.

### DISCLOSURE OF THE INVENTION

The present inventors made intensive studies, and as a result, they found that the reason for a low optical transmission efficiency of the optical waveguide manufactured by the conventional method lies in the fact that bubbles are adhered to the surface of the cores to remain thereon when allowing a liquid-state resin to flow to be extended on the surface of the cores to form an over-cladding layer.

Bubbles included on a resin layer are discharged to the outside through a vent hole by heating the resin layer that flows to be extended on the surface of the cores and pressing a concave-shaped mold having a vent hole on the resin layer. Bubbles remaining on the periphery of the cores can be effectively reduced in this manner. As a result, an optical waveguide having superior optical transmission efficiency can be obtained.

The gist of the present invention is described as follows:
(1) A method for manufacturing an optical waveguide comprises a plurality of pattern-formed cores and an over-cladding layer covering the plurality of pattern-formed cores, wherein the method includes: step A of forming a resin layer for covering the plurality of pattern-formed cores by allowing a liquid-state resin to flow to be extended; and step B of forming an over-cladding layer from the resin layer by pressing a concave-shaped mold having a vent hole in a concave section leading to the outside of the mold on a resin layer after or while the resin layer is heated.
(2) The method for manufacturing an optical waveguide according to the present invention is characterized in that, in the step B, either one or both of a light-releasing portion and a light-incident portion of the ends of the over-cladding layer are molded into lens shapes.
(3) The method for manufacturing an optical waveguide according to the present invention is characterized in that the lens-shaped portion molded at each end of the over-cladding layer has an elongated lens shape formed into virtually a 1/4 arc shape in its side cross section.

### EFFECTS OF THE INVENTION

The manufacturing method of the present invention makes it possible to obtain an optical waveguide having high optical transmission efficiency. Moreover, by molding a light-releasing portion at the end of the over-cladding layer into a lens shape, an optical waveguide device capable of releasing parallel light beams from its tip end can be obtained. Moreover, by molding the light incident portion of the end of the over-cladding layer into a lens shape, an optical waveguide device capable of condensing light beams that have been made incident on the tip end into the cores is obtained.

### BRIEF DESCRIPTION OF THE DRAWINGS

FIGs. 1 (a) to 1 (e) are schematic views respectively showing a method for manufacturing an optical waveguide of the present invention;
FIG. 2 is a cross-sectional view showing an optical waveguide obtained by a manufacturing method of the present invention;
FIG. 3 shows an optical touch panel utilizing an optical waveguide obtained by a manufacturing method of the present invention.

### DESCRIPTION OF THE PREFERRED EMBODIMENTS

### [Method for Manufacturing Optical Waveguide of the Invention]

The present invention provides a method for manufacturing an optical waveguide which comprises a plurality of cores pattern-formed and an over-cladding layer covering the plurality of cores, wherein the method includes the steps A and B that will be described below. According to the manufacturing method, bubbles adhered to the periphery of the vent hole of the concave-shaped mold are effectively discharged, so that it is possible to obtain an over-cladding layer with small light scattering, which leads to obtain an optical waveguide with high optical transmission efficiency. In a conventional manufacturing method, as the viscosity of a liquid-state resin to flow to be extended is higher and as the thickness of an over-cladding layer is greater, it become more difficult to remove bubbles adhered onto the periphery of cores. In the manufacturing method of the present invention, a marked effect can be obtained particularly in the case of such conditions.

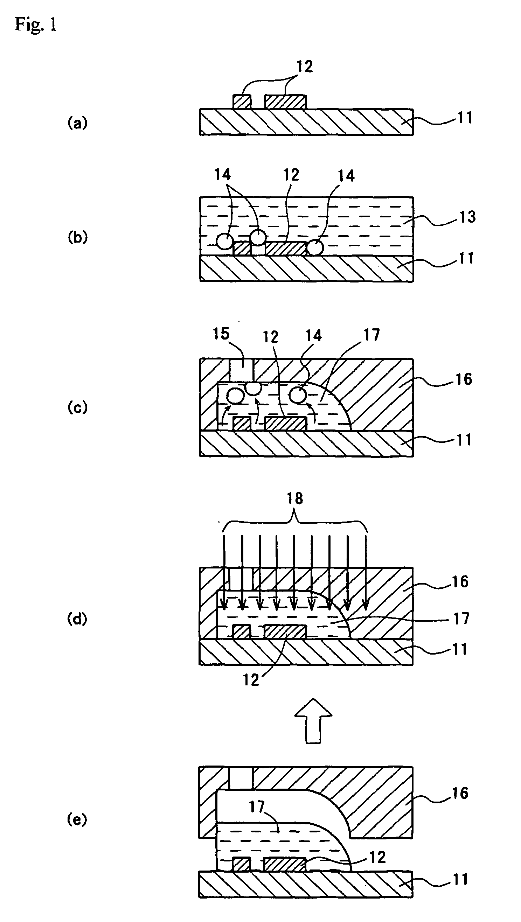

FIGs. 1 (a) to 1 (e) are schematic views that show a method for manufacturing an optical waveguide of the present invention in preferred embodiments. FIG. 1 (a) shows a step of pattern-forming cores 12 on the surface of an under-cladding layer 11. FIG. 1 (b) shows a step of forming a resin layer 13 by allowing a liquid-state active energy ray-curable resin that will form an over-cladding layer to flow to be extended so as to cover the pattern-formed cores 12. At this time, it is unavoidable that bubbles 14 exist on the periphery of the cores 12. Light that passes through the cores 12 become scattered due to the bubbles 14. FIG. 1 (c) shows a step of forming an over-cladding layer 17 from the resin layer 13 by pressing a concave-shaped mold 16 having a vent hole 15 in a concave section leading to the outside of the mold on the resin layer 13 while or after heating the resin layer 13. An over-cladding layer 17 is produced by forming the resin layer 13 in a specific shape. The bubbles 14 are released from the periphery of the cores 12 by heating and pressing the resin layer 13 to be discharged from the vent hole 15 leading to the outside of the concave-shaped mold 16. FIG. 1 (d) shows a step of curing the over-cladding layer 17 by the irradiation with active energy rays 18 (for example, ultraviolet rays) from the outside of the concave-shaped mold 16. FIG. 1 (e) shows a step of removing the concave-shaped mold 16.

The manufacturing method of the present invention includes the following steps A and B, preferably includes the step C. Step A: a step of forming a resin layer by allowing an active energy ray-curable resin that will form an over-cladding layer later to flow to be extended in a manner so as to cover pattern-formed cores (FIG. 1 (b)). Step B: a step of forming an over-cladding layer by pressing a concave-shaped mold having a vent hole on the resin layer while or after heating the resin layer (FIG. 1 (c)). Step C: a step of curing the over-cladding layer by the irradiation with active energy rays from the outside of the concave-shaped mold (FIG. 1 (d)).

Since an active energy ray-curable resin is used in the manufacturing method of the present invention, fluidity of the resin layer is not deteriorated, even if heat treatment is performed to remove bubbles. Accordingly, it is possible to effectively remove the bubbles, which leads to prepare an optical waveguide with high optical transmission efficiency.

### [Step A]

The Step A to be used in the present invention is a step of forming a resin layer by allowing a liquid-state resin for forming an over-cladding layer later to flow to be extended in a manner so as to cover the pattern-formed cores.

The liquid-state resin for forming an over-cladding layer to be used in the present invention (hereinafter refers to as a liquid-state resin) includes a resin having a refractive index lower than that of the cores. Although the liquid-state resin is not particularly limited, an active energy ray-curable resin is preferably used. Since, upon carrying out a heating process in the step B to be described later, the viscosity hardly increases in the active energy ray-curable resin, the curable resin is desirably used for removing bubbles. In the present specification, the "active energy ray-curable resin" refers to a resin in which a cross-linking process progresses by energy, such as infrared rays, ultraviolet rays, an electron beam or the like to be formed into a stable state that is hardly dissolved and fused. The active energy ray-curable resin is preferably prepared as an ultraviolet ray-curable resin. The ultraviolet ray-curable resin prior to curing normally contains a photo-polymerizable prepolymer that is polymerized by a photochemical function, and in addition to this, may also contain a reactive diluent, a photo-polymerization initiator, a solvent, a leveling agent and the like.

From the viewpoint of easily moving bubbles adhered to the periphery of the cores, the viscosity of the liquid-state resin is preferably set at 1 mPa·s to 500 mPa·s, more preferably 2 mPa·s to 300 mPa·s These viscosities are obtained based on a measuring method described in the Example.

The aforementioned resin layer is a layer obtained by allowing the liquid-state resin to flow to be extended in a manner so as to cover the pattern-formed cores. The thickness of the resin layer (the thickness of the flow by casting), which is suitably determined, depending on the height of the cores, is preferably set at 15 µm to 150 µm. Although not particularly limited, a spin coating method, a dipping method, a casting method and the like are used as the method for allowing the liquid-state resin to flow to be extended.

The cores are formed by any material having a refractive index higher than that of the over-cladding layer. As a material used for forming the cores, an ultraviolet ray-curable resin having a superior pattern-forming property is preferably used. Preferable examples of the ultraviolet ray-curable resin include acryl-based ultraviolet ray-curable resins, epoxy-based ultraviolet ray-curable resins, siloxane-based ultraviolet ray-curable resins, norbornene-based ultraviolet ray-curable resins, polyimide-based ultraviolet ray-curable resins and the like.

While it is to be understood that the method for pattern-forming the cores is not limited, a dry etching method, a transfer method, an exposing/developing method, a photo-bleaching method and the like may be used as the method for pattern-forming the cores.

The cores are formed on the surface of a base material or an under-cladding layer. Normally, the base material and the under-cladding layer have a refractive index lower than that of the cores. Although not particularly limited, the cross-sectional shape of the cores is preferably formed into a trapezoidal shape or a square shape. The width of the cores is preferably set at 10 µm to 500 µm, and the height of the cores is preferably set at 10 µm to 100 µm. When the cores have a trapezoidal shape, the width of the cores corresponds to the length of the lower bottom, and the height of the cores corresponds to a length of a line segment connecting the middle point of the upper bottom and the middle point of the lower bottom.

### [Step B]

In the step B to be used in the present invention, an over-cladding layer is formed by pressing a concave-shaped mold having a vent hole leading to the outside of the mold in a concave section on the resin layer after heating the resin layer, or while heating the resin layer.

The heating process of the resin layer is carried out so as to remove bubbles adhered to the periphery of the cores. The temperature to which the resin layer is heated is preferably set at 40°C to 120°C, more preferably, 60°C to 100°C, although, when a solvent is contained in the resin layer, it depends on the boiling point of the solvent.

It is possible to form an over-cladding layer in a desired shape by setting the shape of the concave-shaped mold appropriately. The concave-shaped mold has a vent hole leading to the outside of the mold for discharging bubbles included in the resin layer in the concave section. There are preferably a plurality of vent holes communicated with a plurality of concave sections, when there are a plurality of concave sections. The size of the vent holes is preferably 0.3 cm² to 2 cm² per 1 cm³ of the liquid-state resin filled in the concave sections of the concave-shaped mold.

While it is to be understood that the material for a concave-shaped mold is not limited, examples of the material includes a quartz, a nickel synthetic metal, a glassy carbon or the like. The surface of the concave-shaped mold may be treated by a releasing agent. A silane coupling agent with a fluororesin molecular structure is preferably used as a releasing agent.

The conditions of pressing the concave-shaped mold on the resin layer are appropriately determined in accordance with the kind of the liquid-state resin and its properties, such as viscosity. For instance, when the resin layer is composed of a liquid-state resin with low viscosity, the pressing pressure is 1 million Pa (approximately 10 atmosphere) or lower. Pressure is hardly necessary except for placing the concave-shaped mold depending on the conditions. The pressure to be applied this time is 0.1 million Pa (approximately 1 atmosphere) or lower.

### [Other Step]

In preferred embodiments, the manufacturing method of the present invention includes the step C of curing an over-cladding layer by the irradiation with active energy rays from the outside of the concave-shaped mold. Ultraviolet rays are preferably used as the active energy-rays. The dose of the ultraviolet rays is preferably set at 100 mJ/cm² to 8,000 mJ/cm². Within this condition range, the over-cladding layer can be sufficiently cured. In the case of applying the step C in the manufacturing method of the present invention, the concave-shaped mold is preferably transparent toward light irradiated. The concave-shaped mold is released from the over-cladding layer after the completion of curing by active energy rays.

### [Optical Waveguide]

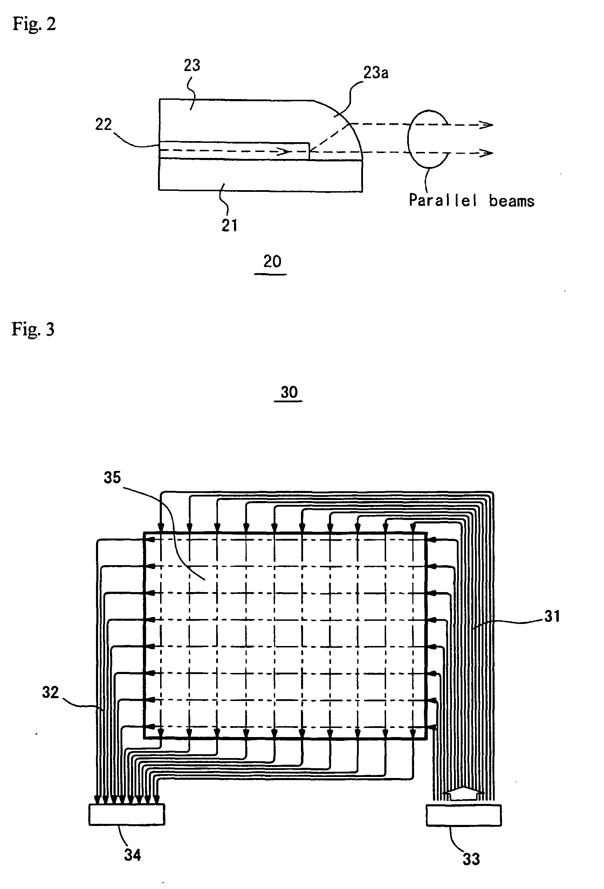

An optical waveguide obtained by the manufacturing method of the present invention includes pattern-formed cores and an over-cladding layer that covers the cores. Preferably, as shown in FIG. 2, an optical waveguide 20 includes an under-cladding layer 21, a core 22 pattern-formed on the surface of the under-cladding layer 21, and an over-cladding layer 23 formed on the under-cladding layer 21. Preferably, the over-cladding layer 23 is formed into a lens-integrated-type over-cladding layer with its tip portion 23a molded into a lens shape.

The lens-integrated-type over-cladding layer is obtained by molding the tip portion of the over-cladding layer into a lens shape in the step B. An optical waveguide, provided with a lens-integrated-type over-cladding layer, can be coupled to an optical element, such as a light-emitting element and a light-receiving element, and used as an optical waveguide device. Such an optical waveguide device can transfer light emitted from the light-receiving element into parallel beams and focus diffused light to transmit the light to the light-receiving element.

When the cladding layer is composed of an under-cladding layer and an over-cladding layer, the thickness of the under-cladding layer is preferably set at 5 µm to 10 mm. The thickness of the over-cladding layer is preferably set in the range from 10 µm to 10 mm, which is thicker than that of the under-cladding layer.

When the lens-shaped portion is integrally molded with the tip portion of the over-cladding layer, the lens-shaped portion is preferably prepared as a convex lens shape, and more preferably prepared as a convex lens shape, with its side cross section being shaped into virtually a 1/4 arc shape (half-cutting of a lenticular lens). Its curvature radius is preferably set at 300 µm to 5 mm, more preferably, 500 µm to 3 mm.

### [Applications]

Although the applications of the optical waveguide produced by the manufacturing method of the present invention are not particularly limited, the optical waveguide is preferably used for, for example, an optical wiring plate, an optical connector, a substrate with optical-electric devices mixedly mounted, an optical touch panel and the like.

### EXAMPLE

### [Preparation for cladding-layer-forming varnish]

(Component A) Epoxy-based ultraviolet ray-curable resin having an alicyclic skeleton (EP4080E, made by Adeka Corporation) 100 parts by weight
(Component B) Photo-acid generator (CPI-200K, made by SAN-APRO Ltd.) 2 parts by weight

These components were mixed to prepare a cladding-layer-forming varnish.

### [Preparation for core-forming varnish]

(Component C) Epoxy-based ultraviolet ray-curable resin containing a fluorene skeleton (OGSOL EG, made by Osaka Gas Chemicals Co., Ltd.) 40 parts by weight (Component D) Epoxy-based ultraviolet ray-curable resin containing a fluorene skeleton (EX-1040, made by Nagase Chemtex Corporation) 30 parts by weight (Component E) 1,3,3-tris(4-(2-(3-oxycetanyl))butoxyphenyl) butane (the preparation method thereof will be described later) 30 parts by weight 1 part by weight of the component B and 41 parts by weight of ethyl lactate were mixed so that a core-forming vanish was prepared.

### [Method for preparing 1,3,3-tris(4-(2-(3-oxycetanyl))butoxyphenyl)butane]

Into a 200 ml-volume three-neck flask equipped with a thermometer, a cooling pipe and a stirring device, 6.68 g (20 mmol) of 1,3,3-tris (4-hydroxy phenyl)butane and 25 ml of N-methyl-2-pyrrolidone were charged, and stirred while being heated to 80°C in a nitrogen atmosphere, until these were completely dissolved. After dissolving, to this was further added 23.46 g (72 mmol) of cesium carbonate, and further stirred for 30 minutes. Thereto was added 17.84 g (66 mmol) of 2-(3-oxycetanyl) butyltosylate preliminarily synthesized, and stirred for 20 hours at 80°C in a nitrogen atmosphere. After completion of the reaction, this was cooled to room temperature, and thereto were then added 100 ml of ethyl acetate and 50 ml of distilled water, and this was then left stood so as to be separated into an aqueous phase and an organic phase. The organic phase thus separated was extracted, and this was further washed with water, and dried for one night by using magnesium sulfuric anhydride. Thereafter, magnesium sulfate was filtered and separated, and the solvent thereof was further distilled off so that a reaction coarse product was obtained. This coarse product was separated and refined by silica gel column chromatography (eluting solution: n-hexane/acetone) so that 12.20 g of a colorless transparent semi-solid matter (yield: 97%) was obtained. The compound thus obtained was analyzed by using ¹H-NMR and ¹³C-NMR (both of these made by Nippon Denshi Co., Ltd.) so that 1,3,3-tris(4-(2-(3-oxycetanyl))butoxyphenyl)butane was confirmed.

### [Production of Optical Waveguide]

The cladding-layer-forming varnish was applied onto the surface of a polyethylene naphthalate film having a thickness of 188 µm, and after being irradiated with 1,000 mJ/cm² of ultraviolet rays, this was subjected to a heating treatment at 80°C for 5 minutes so that an under-cladding layer having a thickness of 20 µm was formed. The under-cladding layer had a refractive index of 1.510 at a wavelength of 830 nm.

The core-forming varnish was applied onto the surface of the under-cladding layer, and this was subjected to a heating treatment at 100°C for 5 minutes so that a core layer was formed. The core layer was covered with a photomask (gap: 100 µm) and this was irradiated with 2,500 mJ/cm² of ultraviolet rays, and further subjected to a heating treatment at 100°C for 10 minutes. Unirradiated portions with ultraviolet rays of the core layer were dissolved and removed by a γ-butyrolactone aqueous solution, and this was subjected to a heating treatment at 120°C for 5 minutes so that a plurality of cores having a core width of 20 µm and a core height of 50 µm were pattern-formed. The plurality of cores respectively had a refractive index of 1.592 at a wavelength of 830 nm.

Methyl ethyl ketone was added to the varnish for forming a cladding-layer to prepare a diluent in such a manner that the viscosity may be 200 mPa·s. The diluent was applied in a manner so as to cover the whole cores so that a resin layer having a wet thickness of 60 µm was formed. The resin layer was heated at 80°C for 5 minutes so that bubbles located on the periphery of the cores were removed by pressing a concave-shaped mold (made of quartz) having a vent hole in a concave section.

A varnish for forming a cladding layer was additionally injected from the vent hole to fill the concave section of the concave-shaped mold with the varnish. The varnish for forming a cladding layer was irradiated with 2,000 mJ/cm² of ultraviolet rays through the concave-shaped mold, and then subjected to a heating treatment at 80°C for 5 minutes. Thus, the over-cladding layer having a thickness of 1 mm at a tip portion, thus molded, was provided with an elongated convex lens formed into virtually a 1/4 arc shape (shape by half-cutting a lenticular lens) in its side cross section. The curvature radius of the convex lens was 1.5 mm, and the refractive index of the over-cladding layer at a wavelength of 830 nm was 1.510.

The optical waveguide thus obtained was provided with an under-cladding layer (thickness: 20 µm), a plurality of cores (width: 20 µm, height: 50 µm) pattern-formed on the under-cladding layer, and an over-cladding layer (thickness: 1 mm) formed on the under-cladding layer in a manner so as to cover the cores.

### [Comparative Example]

A concave-shaped mold (made of quartz) having a vent hole similar to the one used in the Example was placed on the core, and a varnish for forming a cladding layer was injected to fill the concave section of the concave-shaped mold with the varnish. An optical waveguide was manufactured in the same processes as in the Example except for that.

### [Evaluation]

Two pieces of each of optical waveguides 31 and 32 having a lens-integrated-type over-cladding layer, manufactured in the Example were prepared. Light-emitting elements 33 (VECSEL, made by Optowell Co., Ltd.) for releasing light having a wavelength of 850 nm were coupled to the end of one optical waveguide 31, while light-receiving elements 34 (CMOS linear sensor array, made by TAOS Co., Ltd.) were coupled to the end of the other optical waveguide 32. The respective optical waveguides 31 and 32 were disposed so as to face each other with a coordinate input area 35 interposed therebetween so that an optical touch panel 30 having 3 inches in diagonal length as shown in FIG. 3 was manufactured. Further, an optical waveguide having a lens-integrated-type over-cladding layer manufactured in Comparative Example was used to manufacture an optical touch panel in the same manner as in the Example.

With reference to the optical touch panel in the Example and the Comparative Example, light having an intensity of 5.0 mW was outputted from each of the light-emitting elements, and the received light intensity was measured by each of the light-receiving elements. Table 1 shows the results. The received light intensity of each of the optical waveguides of the Example was by 0.4 mW higher than that of the Comparative Example so that it was confirmed that each of the optical waveguides of the Example had a higher optical transmission efficiency.

**[Table 1]**

| | Heating/pressing treatment (After heating a resin layer that covers cores, a treatment to press a concave-shaped mold having a vent hole is performed.) | Light-receiving strength (mW) |
|---|---|---|
| Example | Yes | 0.9 |
| Comparative Example | No | 0.5 |

### [Measuring Method]

### [Viscosity]

By using a Stress Rheo Meter (HAZE Rheo Stress 600, made by ThermoHAAKE Co., Ltd.), measurements were carried out at a temperature of 25°C.

### [Refractive Index]

The cladding-layer-forming varnish and the core-forming varnish were respectively applied onto silicon wafers by a spin coating method to form films thereon so that refractive-index measuring samples were prepared, and these were measured by using a prism coupler (made by Thyron Co., Ltd.).

### [Core Width, Core Height]

Each of the manufactured optical waveguides was cut with cross sections by using a Dicer-type cutter (DAD522, made by DISCO Co., Ltd.), and the cross-sectional face was observed and measured by using a laser microscope (made by Keyence Corporation).

## Claims

1. A method of manufacturing an optical waveguide comprising a plurality of pattern-formed cores and an over-cladding layer covering the plurality of pattern-formed cores, wherein the method includes:
step A of forming a resin layer for covering the plurality of pattern-formed cores by allowing a liquid-state resin to flow to be extended; and
step B of forming an over-cladding layer from the resin layer by pressing a concave-shaped mold having a vent hole in a concave section leading to the outside of the mold on the resin layer while or after heating the resin layer so as to remove bubbles from the periphery of the cores.

2. The method according to claim 1, wherein, in the step B, either one or both of a light-releasing portion and a light-incident portion of the ends of the over-cladding layer are molded into lens shapes.

3. The method according to claim 2, wherein the lens-shaped portion molded at each end of the over-cladding layer has an elongated lens shape formed into virtually a 1/4 arc shape in the side cross section thereof.

## Patentansprüche

1. Verfahren zur Herstellung eines Lichtwellenleiters, der eine Vielzahl von Muster-bildenden Kernen und eine die Vielzahl der Muster-bildenden Kernen überdeckende Verkleidungsschicht umfasst, wobei das Verfahren folgendes einschließt:
Schritt A: Bilden einer Harzschicht zur Überdeckung der Vielzahl der Muster-bildenden Kerne, **dadurch**, dass es einem Flüssigharz erlaubt ist zu fließen und sich zu erstrecken; und
Schritt B: Bilden einer Verkleidungsschicht aus der Harzschicht durch Pressen einer konkaven Form, die ein Belüftungsloch in einem konkaven Abschnitt aufweist, welches zur Außenseite der Form auf der Harzschicht während oder nach dem Erwärmen der Harzschicht führt, um Blasen aus der Umgebung der Kerne zu entfernen.

2. Verfahren gemäß Anspruch 1, wobei in Schritt B ein Licht-freisetzender Teil und/oder ein Licht-einfallender Teil der Enden der Verkleidungsschicht in Linsengestalten geformt ist.

3. Verfahren gemäß Anspruch 2, wobei der Linsen-förmig geformte Teil an jeweils den Enden der Verkleidungsschicht eine gestreckte Linsenform aufweist, die nahezu zu einer 1/4-Bogengestalt in deren seitlichem Querschnitt ausgebildet ist.

## Revendications

1. Procédé de fabrication d'un guide d'ondes optique comprenant une pluralité d'âmes formées à motif et une couche de surgainage couvrant la pluralité d'âmes formées à motif, dans lequel le procédé inclus :
une étape A de formation d'une couche de résine pour couvrir la pluralité d'âmes formées à motif en permettant à une résine à l'état liquide de s'écouler pour être étendue ; et
une étape B de formation d'une couche de surgainage à partir de la couche de résine en pressant un moule de forme concave ayant un trou d'évent dans une section concave menant à l'extérieur du moule sur la couche de résine pendant ou après chauffage de la couche de résine afin d'enlever des bulles de la périphérie des âmes.

2. Procédé selon la revendication 1, dans lequel, dans l'étape B, l'une ou l'autre ou les deux d'une partie de libération de lumière et d'une partie d'incidence de lumière des extrémités de la couche de surgainage sont moulées dans des formes de lentille.

3. Procédé selon la revendication 2, dans lequel la partie en forme de lentille moulée au niveau de chaque extrémité de la couche de surgainage a une forme de lentille allongée formée pratiquement en une forme de 1/4 d'arc dans la section transversale latérale de celle-ci.
